# EUROPEAN PATENT APPLICATION

(11) **EP 3 121 668 A1**
(43) Date of publication of application: **25.01.2017**
(21) Application number: 15178116.8
(22) Date of filing: 23.07.2015
(51) Int. Cl.: G05B 19/05

(54) **A COMPUTER IMPLEMENTED METHOD AND SYSTEM FOR ENGINEERING A PROCESS**

(71) Applicant: Siemens Aktiengesellschaft, 80333 München (DE)
(72) Inventor: Gupta, Rohit Kumar, 122015 Gurgaon, Haryana (IN)
(74) Representative: Patentanwaltskanzlei WILHELM & BECK

(57) **Abstract**

A computer implemented method and an engineering system (102) for engineering a process are provided. The engineering system (102) displays multiple automation function instances (AFIs) (402) on a user device (101) and receives a selection of an AFI (402). The engineering system (102) receives multiple proposed process engineering variants (403) based on the received AFI (402) from one or more databases (107, 110) and receives a selection of a proposed process engineering variant (403) from the user device (101). The engineering system (102) receives an engineered process model (406) already completed or in progress, comprising the AFI (402) in connection with other AFIs (402), from the user device (101). The engineering system (102) generates and displays a comparative analysis between the engineered process model (406) and the proposed process engineering variant (403) indicating one or more differences between the engineered process model (406) and the proposed process engineering variant (403).

## Description

A computer implemented method and system for engineering a process.

The present invention relates to a computer implemented method for engineering a process. The present invention also relates to a computer implemented system for engineering a process. More particularly, the present invention relates to engineering a process in a distributed control system. Such a method and system are disclosed in US 6889096.

Typically, a distributed control system facilitates concurrent engineering, wherein a plurality of project engineers work at the same time on a project without having to divide the project into multiple sub-projects. Therefore, distributed control systems optimize the time required in engineering a process or a product. The distributed control systems also facilitate division of a large engineering project into a plurality of sub-projects according to technological viewpoints, in order to enable the project engineers to work in parallel with several teams in real time. These individual sub-projects are added to or removed from a multi-project at any point in time. In this type of a distributed control system, multiple logical engineering blocks are employed, using which a product or a process can be engineered. These logical engineering blocks represent electronic components, for example, logic gates, power supplies, etc., used to engineer a process or a product.

Currently, the engineering of a process using these logical engineering blocks is performed by the distributed control system experts employed by a vendor, or by a customer possessing domain knowledge of the process, at an engineering site. Typically, a distributed control system expert or the customer with domain expertise creates the logic for engineering the process using the logical engineering blocks. However, the engineering that these experts perform is not always the best possible solution as this engineering is dependent on the amount of domain knowledge of the expert. When this engineering is implemented in a plant, there are various changes that need to be performed as per the plant requirements and plant environment. However, the implementation of these changes is limited by the scope of knowledge that the respective experts possess, and as a result, one or more faults can arise due to errors in the engineering performed by the experts. These engineering errors are typically, a result of, lack of verification and validation performed, of the engineering, while a process or a product is being engineered and while the engineering is being implemented in real time.

US 6889096 discloses one such distributed plant asset management system with means for creating a plant asset template using various configurations associated with the plant assets. This plant asset management system discloses means for exporting and/or importing the plant asset templates created to and/or from, another plant asset management system in a distributed control system environment, such that these exported and/or imported plant asset templates can be subsequently used for configuring another plant asset management system. The plant asset management system further discloses means for displaying both static and real time data on a graphical plot providing a comparison of real time and historical data associated with a plant asset.

The aforementioned method disclosed in US 6889096 allows a user to configure plant asset management system by referring to the historical data in form of the imported/exported plant asset templates. This aforementioned method however is time consuming and has maximum scope for engineering errors as the accuracy of engineering depends on the user's capacity to correlate a plant asset's configuration being performed with respect to the available historical data associated with the plant asset. However, typically, when a user is developing the engineering or is in the process of configuring a plant asset, he/she may face difficulties in realizing disparities between the engineering he/she is performing and the proposed ideal engineering that can be derived from the historical data. This particularly happens because a user fails to visualize what a process would look like towards the end of the engineering and therefore fails to understand engineering errors resulting from such comparisons. Thus, the user may wish to develop an end to end engineering of a process first and then perform a net corrective measure on the disparities found in each of the sub processes of the developed engineering for a clearer perspective of the engineering errors.

Hence, there is a long felt but unresolved need for a method and system that compares an engineering that is already developed for one or more variants of a process, with the ideal engineering for each of these process variants. Moreover, there is a need for a method and system that compares the developed engineering with the ideal engineering at a plurality of levels of detail in order to facilitate an efficient troubleshooting during configuration and modification of the already developed engineering.

Therefore, it is an object of the present invention to provide a computer implemented method and system for engineering a process.

The computer implemented method disclosed herein achieves the aforementioned object by receiving an already engineered process model, comparing the engineered process model with a proposed process engineering variant based on a plurality of comparison parameters, and displaying the comparison indicating one or more differences between the engineered process model and the proposed process engineering variant. The computer implemented system disclosed herein achieves the aforementioned object by providing a data reception module configured to receive an engineered process model, a comparator module configured to compare the engineered process model with a proposed process engineering variant based on a plurality of comparison parameters, and a display module configured to display the comparison indicating one or more differences between the engineered process model and the proposed process engineering variant.

The computer implemented method disclosed herein employs an engineering system comprising at least one processor configured to execute computer program instructions for engineering a process. The engineering system displays a plurality of automation function instances on a user device via a graphical user interface (GUI) that the engineering system employs. An automation function instance is a logical representation of a component used in the engineering of a process and comprises component characterization parameters comprising, for example, input ports and output ports. The engineering system receives, from the user device, a selection of an automation function instance from the displayed automation function instances. The engineering system receives a plurality of proposed process engineering variants based on the received automation function instance from one or more databases. That is, if the automation function instance received is, for example, of a universal power supply (UPS) then the engineering system receives each of the proposed process engineering variants comprising one or more UPS automation function instances from the databases. Each of the proposed process engineering variants represents a variant of the process implementation or a variant of the process configuration. Each of the proposed process engineering variants comprises proposed configuration settings of the process and one or more of proposed connections of the automation function instance with other automation function instances for engineering of the process.

The engineering system displays the proposed process engineering variants on the user device. The engineering system receives a selection of a proposed process engineering variant from the proposed process engineering variants, from the user device. The engineering system receives an engineered process model from the user device. This engineered process model comprises engineering performed by a user of the user device for the selected process engineering variant. The engineered process model comprises the selected automation function instance in connection with one or more other automation function instances. Advantageously, according to a preferred embodiment of the invention, the engineered process model is a completely engineered process model. According to another embodiment of the invention, the engineered process model is a partially engineered process model.

The engineering system generates a comparative analysis by comparing the engineered process model and the proposed process engineering variant based on a plurality of comparison parameters. The comparison parameters comprise configuration settings associated with the process and one or more of a plurality of connections associated with the automation function instance. The engineering system displays the generated comparative analysis indicating one or more differences between the engineered process model and the proposed process engineering variant, for engineering of the process, on the user device.

According to a preferred embodiment of the invention, the databases are periodically updated with the proposed process engineering variants, one or more proposed hardware configuration models associated with the process, technical news associated with the process, and technical publications associated with the process. This periodic updating ensures that the information, for example, each of the proposed process engineering variants, used for generation of the comparative analysis, is latest in version and comprises a single consolidated engineering per process variant. This consolidated engineering comprises modifications and updates incorporated based on latest process related publications, news, etc. The modifications comprise, for example, changes made to the engineering based on the errors encountered during implementation of the engineering, latest technological advances in the field of the engineering, etc. The updates comprise, for example, process related updates that may affect the engineering, updates associated with the automation function instances used in the engineering, etc. Thus, the consolidated engineering comprises modifications and updates resulting due to engineering errors occurring across the distributed control system while engineering the process or while implementing the engineered process and the latest technical advances associated with the process. In a preferred embodiment, each of the modifications and the updates are authenticated to be relevant to the engineering that is performed using the distributed control system, by engineering experts associated with the distributed control system. Therefore, this periodically updated information can be used in a distributed control system for validating engineering that is already completed or is in progress, to avoid errors occurring at any of the stages of engineering at any remote engineering site and to preclude performance of incorrect engineering, decrease error debugging and maintenance costs, and avoid casualties due to faults arising from engineering errors in a process.

In one or more embodiments of the present invention, related systems include but are not limited to circuitry and/or programming for effecting the methods referenced herein; the circuitry and/or programming can be any combination of hardware, software, and/or firmware configured to effect the herein-referenced methods depending upon the design choices of a system designer. Also, various structural elements may be employed depending on the design choices of the system designer.

For the purpose of illustrating the invention, exemplary constructions of the invention are shown in the drawings. However, the invention is not limited to the specific methods and components disclosed herein. The description of a method step or a component referenced by a numeral in a drawing is applicable to the description of that method step or component shown by that same numeral in any subsequent drawing herein.

The present invention is further described hereinafter with reference to illustrated embodiments shown in the accompanying drawings, in which:
- FIG 1: exemplarily illustrates an engineering system for engineering a process;
- FIG 2: is a process flow chart exemplarily illustrating a computer implemented method for engineering a process;
- FIG 3: is a block diagram illustrating an exemplary architecture of a computer system employed by the engineering system for engineering a process; and
- FIGs 4A-4G: exemplarily illustrate screenshots of a graphical user interface provided by the engineering system on a user device for engineering a process.

Various embodiments of the present invention are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments of the present invention. It may be evident that such embodiments may be practiced without these specific details.

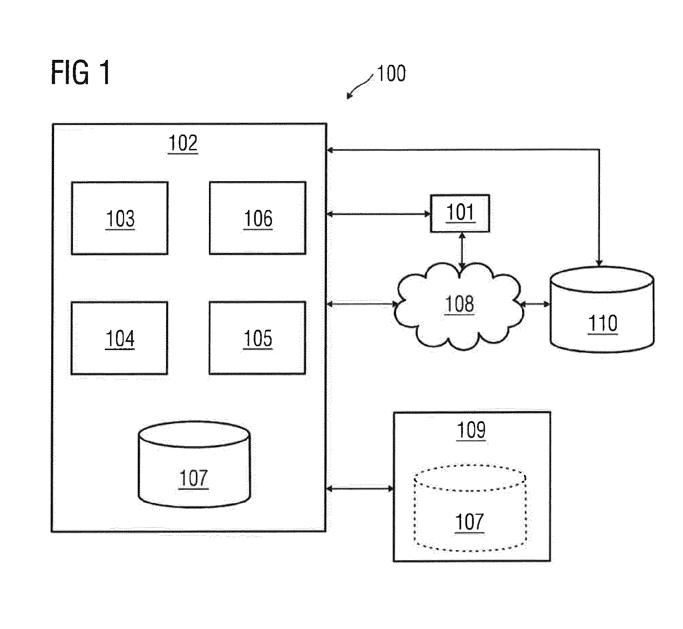

FIG 1 exemplarily illustrates a computer implemented system 100 for engineering a process. As used herein, the term "process" refers to logic of connection of one or more electronic components for achieving a certain operational objective. For example, a process of system shutdown comprises performing a safe shutdown of a system by operating one or more electronic components, on occurrence of one or more events such as power outage, faults, etc., to ensure protection of the system under such occurrences. The computer implemented system 100 disclosed herein comprises an engineering system 102 accessible by a user device 101. The user device 101 is, for example, a personal computer, a tablet computing device, a mobile computer, a portable computing device, a laptop, a personal digital assistant, a touch centric device, a workstation, a client device, a network enabled computing device, an interactive network enabled communication device, any other suitable computing equipment, and combinations of multiple pieces of computing equipment. The engineering system 102 disclosed herein is in operable communication with a remote database 110 over a communication network 108. The network 108 is, for example, the internet, an intranet, a wired network, a wireless network, a communication network, a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a long-term evolution (LTE) mobile communication network, a public telephone network, etc., a local area network, a wide area network, an internet connection network, an infrared communication network, etc., or a network formed from any combination of these networks.

In a preferred embodiment, the engineering system 102 is downloadable and usable on the user device 101. In another embodiment, the engineering system 102 is configured as a web based platform, for example, a website hosted on a server or a network of servers. In another embodiment, the engineering system 102 is implemented in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The engineering system 102 is developed, for example, using Google App engine cloud infrastructure of Google Inc., Amazon Web Services^{®} of Amazon Technologies, Inc., the Amazon elastic compute cloud EC2^{®} web service of Amazon Technologies, Inc., the Google^{®} Cloud platform of Google Inc., the Microsoft^{®} Cloud platform of Microsoft Corporation, etc. In an embodiment, the engineering system 102 is configured as a cloud computing based platform implemented as a service for engineering a process.

The engineering system 102 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media such as optical discs or magnetic disks, volatile media such as a register memory, a processor cache, etc., and transmission media such as wires that constitute a system bus coupled to the processor, except for a transitory, propagating signal. The non-transitory computer readable storage medium is configured to store computer program instructions defined by modules, for example, 103, 104, 105, etc., of the engineering system 102. The processor is configured to execute the defined computer program instructions. As exemplarily illustrated in FIG 1, the engineering system 102 comprises a graphical user interface (GUI) 106. A user using the user device 101 can access the engineering system 102 via the GUI 106. The GUI 106 is, for example, a webpage of a website hosted by the engineering system 102, an online web interface, a web based downloadable application interface, etc. The engineering system 102 further comprises a display module 103, a data reception module 104, and a comparator module 105.

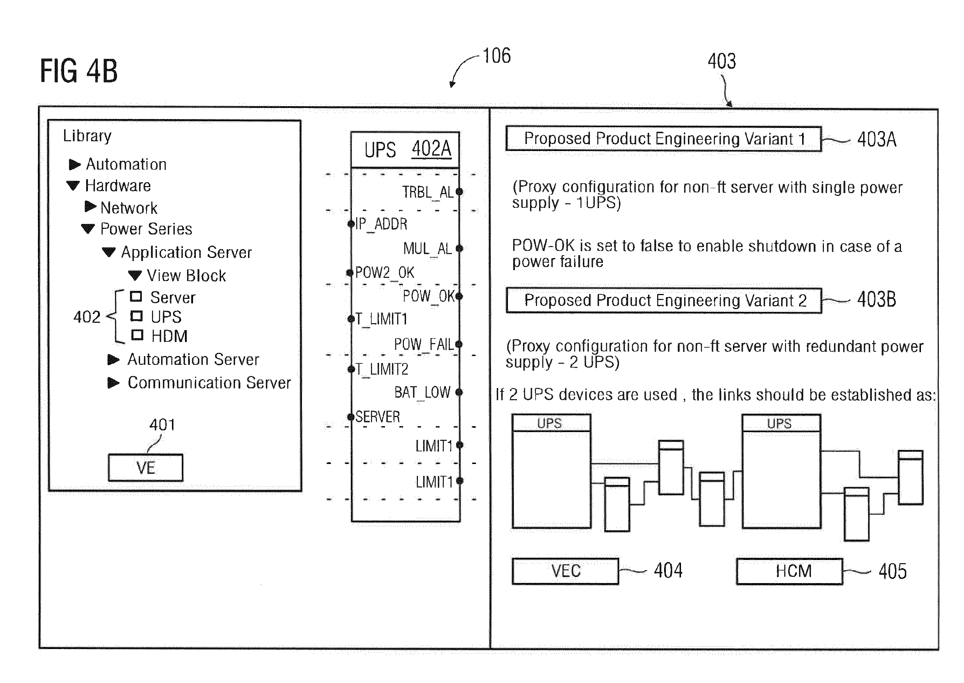

The display module 103 displays a plurality of automation function instances on the user device 101, via the graphical user interface (GUI) 106. As used herein, "automation function instances" refer to logical engineering blocks representing electronic components comprising, for example, logic gates, power supplies, etc., used in engineering a process. These automation function instances, exemplarily illustrated in FIGs 4B-4F, comprise logical input ports and logical output ports of the electronic components. The automation function instances are, for example, pin-outs or pin diagrams illustrating port names and cross-references between the ports. Thus, an automation function instance is a logical representation of a component used in engineering of the process and comprises component characterization parameters comprising input ports and output ports. The data reception module 104 receives a selection of an automation function instance from the displayed automation function instances, from the user device 101. In an embodiment, the GUI 106 is a touch enabled interface using which a user of the user device 101 can perform one or more of a plurality of actions on the displayed automation function instances. These actions comprise, for example, touch, drag, drop, zoom in, zoom out, etc.

The data reception module 104 further receives a plurality of proposed process engineering variants based on the received automation function instance from one or more databases, for example, a local database 107 and/or the remote database 110. Each of the proposed process engineering variants comprises one or more of proposed connections of the automation function instance with other automation function instances for engineering of the process, and proposed configuration settings of the process for a particular variant of the process. In a preferred embodiment, these variants are different configurations of a process, that can be implemented using various electronic components in various quantities and various configurations. For example, in a process of a safe shutdown of a control system, the proposed process engineering variants comprise a process variant with a single universal power supply (UPS), a process variant with dual UPS, a process variant with a redundant server configuration, etc. The proposed process engineering variants are exemplarily illustrated in FIGs 4B-4F. The databases 107, 110 are any storage areas or mediums that can be used for storing data and files such as the proposed process engineering variants. The databases 107, 110 are periodically updated with the proposed process engineering variants, one or more proposed hardware configuration models associated with the process, technical news associated with the process, and technical publications associated with the process. For example, as soon as updates regarding the engineering of the process or implementation of the process are published, the distributed control system experts possessing domain knowledge update the remote database 110. Once the remote database 110 is updated, the engineering system 102 receives a trigger from an external engineering system, for example, an engineering system residing on the central server in a distributed control system wherein the central server comprises the remote database 110. The triggers are communicated via, for example, an electronic mail or a short message service (SMS). On receiving the trigger, the engineering system 102 establishes communication with the remote database 110 to update the local database 107 with the latest updates associated with the process. In an embodiment, the engineering system 102 establishes communication with the remote database 110 at predefined time intervals to check for new updates, if any. In another embodiment, the engineering system 102 receives update patches, that is, data packets comprising the updates from the external engineering system, for updating the local database 107. In a preferred embodiment, the engineering system 102 establishes communication with the remote database 110 on a requirement basis to avoid slowing down of data processing speed of the engineering system 102.

Each of the databases 107, 110 is, for example, a structured query language (SQL) data store or a not only SQL (NoSQL) data store such as the Microsoft^{®} SQL Server^{®}, the Oracle^{®} servers, the MySQL^{®} database of MySQL AB Company, the mongoDB^{®} of MongoDB, Inc., the Neo4j graph database of Neo Technology Corporation, the Cassandra database of the Apache Software Foundation, the HBase™ database of the Apache Software Foundation, etc. In an embodiment, the databases, for example, the local database 107 can also be a location on a file system directly accessible by the engineering system 102 as exemplarily illustrated in the FIG 1. In another embodiment, the databases, for example, the local database 107 is accessible by the engineering system 102 via a network attached storage device 109. As used herein, "network attached storage device" refers to an electronic device that is capable of storing data, for example, the proposed process engineering variants, and is connected to a network 108 for supplying the stored data to one or more clients such as the engineering system 102, on the network 108. In this embodiment, the local database 107 exists on an external device, that is, the network attached storage device 109 and the engineering system 102 communicates with the network attached storage device 109 through the network 108. In another embodiment, the databases, for example, the remote database 110 can be remotely accessed by the engineering system 102 via the network 108 as exemplarily illustrated in the FIG 1. In another embodiment, the databases, for example, the local database 107 and/or the remote database 110 are configured as cloud based databases implemented in a cloud computing environment, where computing resources are delivered as a service over the network 108.

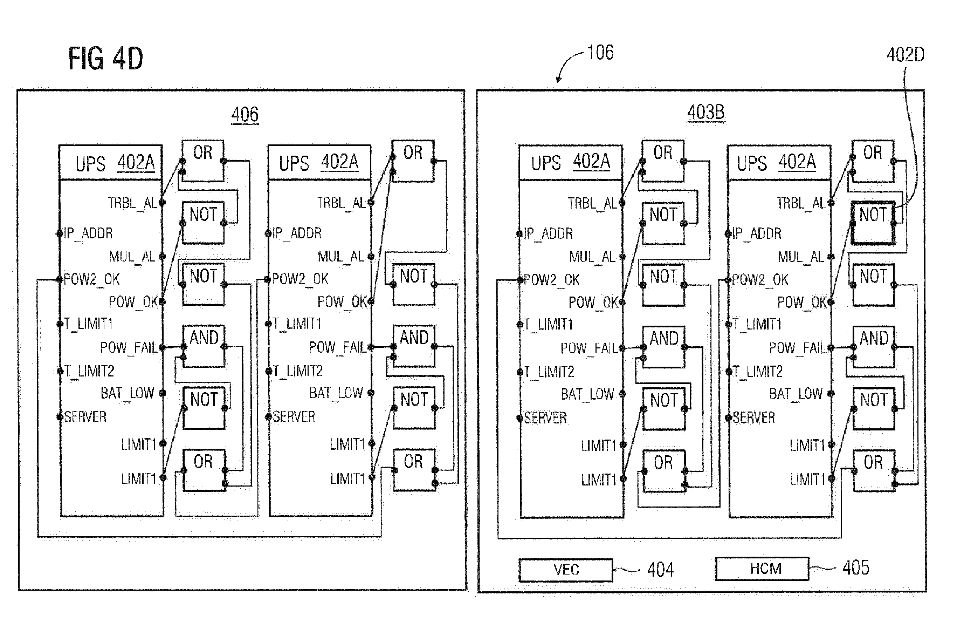

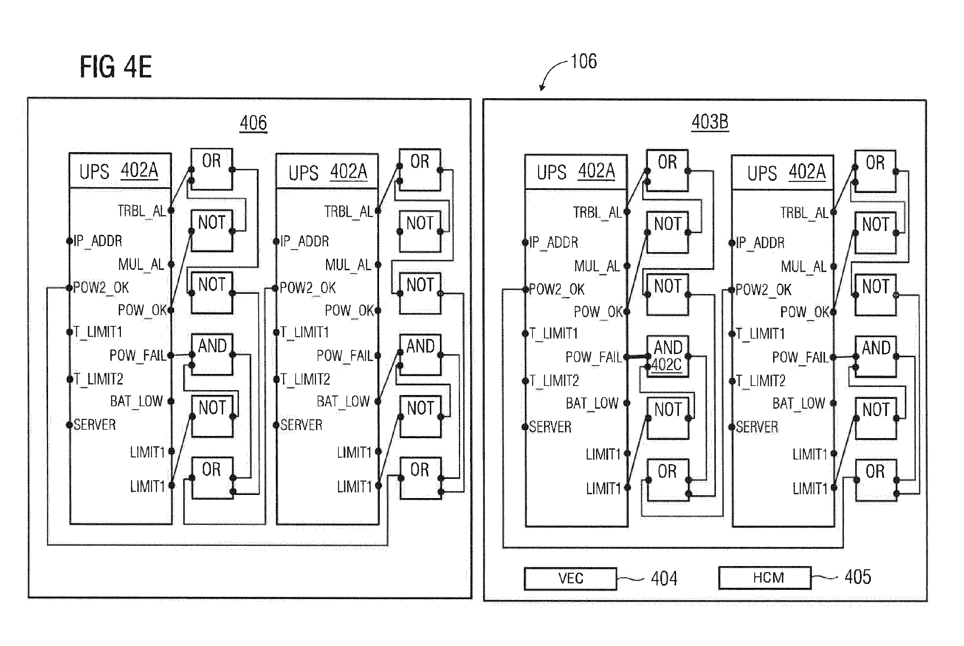

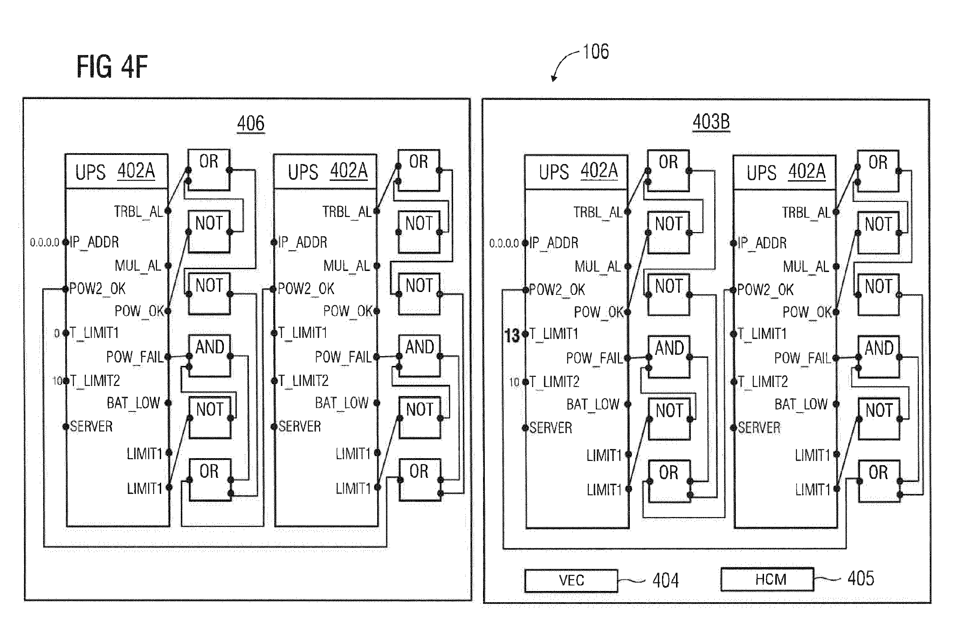

The display module 103 displays each of the proposed process engineering variants received from the databases, on the user device 101. The data reception module 104 receives, from the user device 101, a selection of a proposed process engineering variant from the displayed proposed process engineering variants. The data reception module 104 receives an engineered process model from the user device 101. The engineered process model comprises the selected automation function instance in connection with one or more of other automation function instances for engineering the process. The comparator module 105 generates a comparative analysis by comparing the engineered process model and the proposed process engineering variant based on a plurality of comparison parameters. The comparison parameters comprise configuration settings of the process and one or more of a plurality of connections associated with the automation function instance. The configuration settings comprise, for example, setting of an input port as high with value 1, low with value 0, or at a particular prescribed value such as limits of operation of a component, etc. The display module 103 displays the generated comparative analysis indicating one or more differences between the engineered process model and the proposed process engineering variant on the user device 101, for engineering the process. These differences comprise, for example, one or more missing automation function instances, one or more automation function instances added against a proposed engineering, one or more missing and/or incorrect logical connections associated with the automation function instances, and incorrect input port or output port configuration values. Comparative analyses with such differences are exemplarily illustrated in the FIGs 4D, 4E, and 4F.

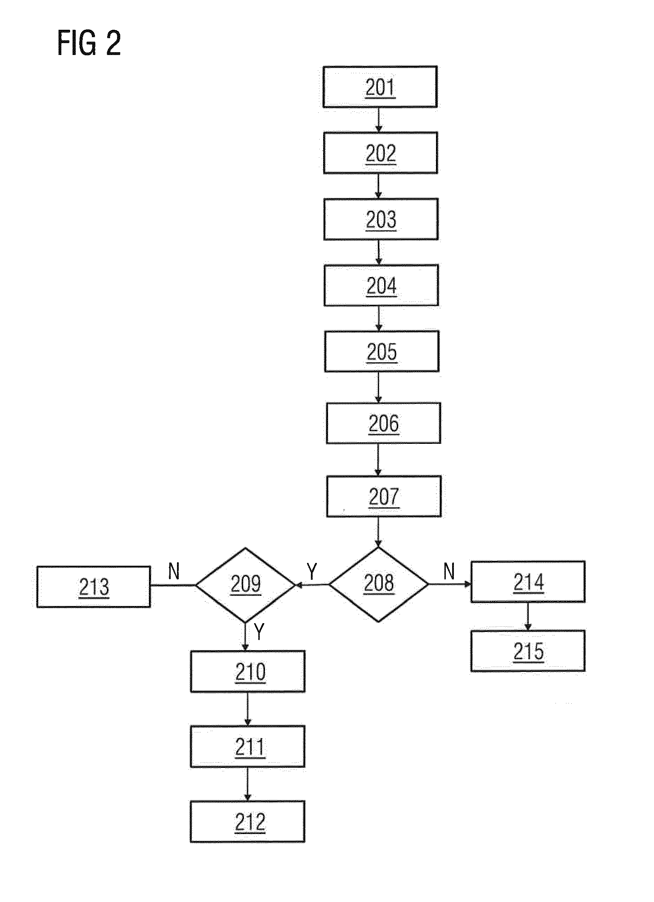

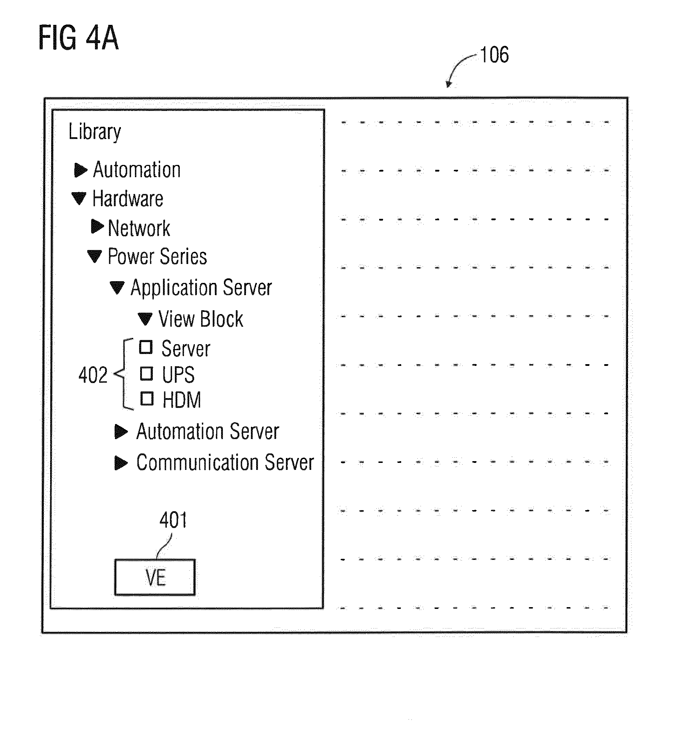

FIG 2 is a process flow chart exemplarily illustrating a computer implemented method for engineering a process. The computer implemented method disclosed herein employs an engineering system 102 exemplarily illustrated in FIG 1 comprising at least one processor configured to execute computer program instructions for engineering a process. The engineering system 102 displays 201 a plurality of automation function instances on a user device 101, via a graphical user interface (GUI) 106 as exemplarily illustrated in FIGs 4A-4G. The engineering system 102 also displays an interface element, for example, a button to facilitate the user to activate a veracious engineering mode of operation. As used herein, "veracious engineering mode" refers to a mode of operation of the engineering system 102, in which, the engineering of the process and a hardware configuration associated with the engineered process is performed in reference with an ideal engineering of the process and an ideal hardware configuration of the components involved in the engineered process respectively, wherein, the ideal engineering and the ideal hardware configuration are latest in version and stored in the databases 107, 110. The displayed automation function instances are then used in engineering a process. The engineering system 102 receives 202 a selection of an automation function instance from the displayed automation function instances, from the user device 101. A user of this user device 101 makes a selection of the automation function instance based on the process being engineered. The engineering system 102 receives an indication for activation of the veracious engineering mode from the user device 101, on detecting a clicking event on the displayed interface element, for example, on a click or a tap of the button.

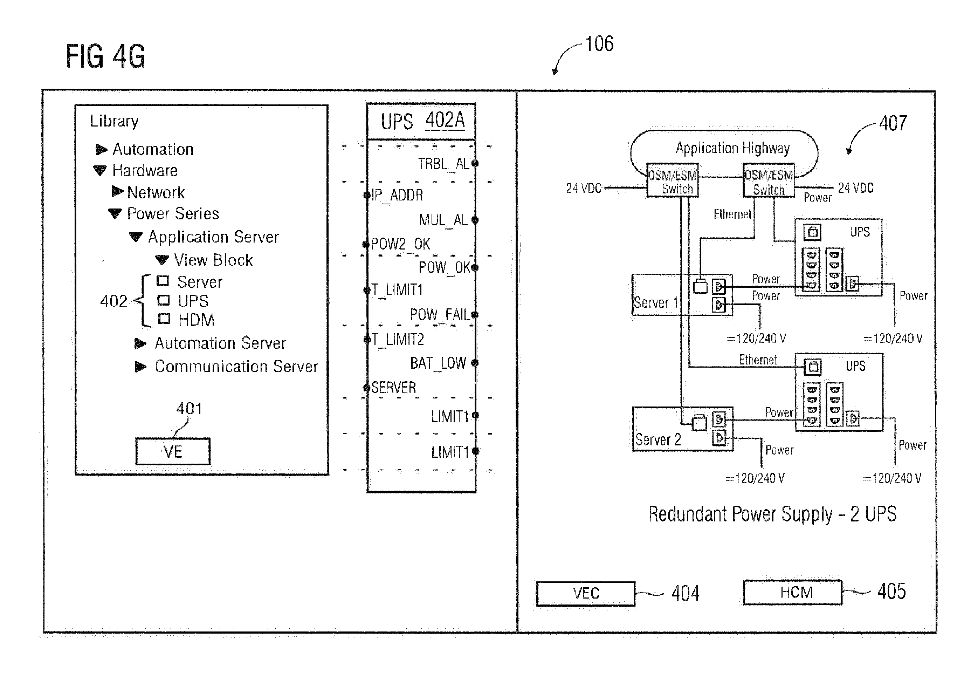

The engineering system 102 activates 203 the veracious engineering mode of operation and receives 204 a plurality of proposed process engineering variants based on the selected automation function instance from one or more databases, for example, the local database 107 and/or the remote database 110. In a preferred embodiment, the engineering system 102 receives the proposed process engineering variants from the local database 107 which in turn communicates with the remote database 110 for updating the proposed process engineering variants as disclosed in the detailed description of FIG 1. On activation of the veracious engineering mode, the engineering system 102 displays 205 each of the proposed process engineering variants along with the selected automation function instance, on the user device 101. The engineering system 102 receives 206 a selection of a proposed process engineering variant from the proposed process engineering variants displayed, from the user device 101. A user of the user device 101 makes a selection of the proposed process engineering variant based on the variant of the process being engineered. The engineering system 102 facilitates two modes of operation comprising a veracious engineering comparison mode and a hardware configuration mode. As used herein, "veracious engineering comparison mode" refers to a mode of operation of the engineering system 102, in which, the engineering of the process is verified and validated in comparison with an ideal engineering of the process, wherein the engineering is either complete or in progress. Also, used herein "hardware configuration mode" refers to a mode of operation of the engineering system 102, in which, an ideal hardware configuration of one or more components used in the process is provided as a reference. Hardware configuration of a component involved in the process comprises, for example, physical connections of the component with other components as exemplarily illustrated in FIG 4G.

The engineering system 102 receives 207 a selection of one of the two modes of operation. The engineering system 102 checks 208 whether the veracious engineering comparison mode is selected. If yes, then the engineering system 102 checks 209 if the engineering is complete. If yes, the engineering system 102 receives 210 an engineered process model from the user device 101. This engineered process model comprises the selected automation function instance in connection with one or more of other automation function instances. The engineering system 102 generates 211 a comparative analysis by comparing the engineered process model and the proposed process engineering variant based on a plurality of comparison parameters comprising, for example, configuration settings of the process and one or more of a plurality of connections associated with the automation function instance. The engineering system 102 displays 212 the generated comparative analysis indicating one or more differences between the engineered process model and the proposed process engineering variant, for engineering the process, on the user device 101.

In an embodiment, at step 209, if the engineering is not complete but is in progress, the engineering system 102 displays 213 the proposed process engineering variant on the user device 101. This displayed proposed process engineering variant is used as a reference in completing the incomplete engineering by a user of the user device 101. In another embodiment, at step 208, if the mode selected is the hardware configuration mode, the engineering system 102 receives 214 from the databases 107, 110, a hardware configuration model of an electronic component of which the automation function instance was selected. For example, if the automation function instance that the engineering system 102 received as a selection is of a universal power supply (UPS), then the engineering system 102 checks whether one or more hardware configuration models for the UPS exist in the databases 107, 110. If hardware configuration models for the UPS are found in the databases 107, 110, then the engineering system 102 receives 214 the hardware configuration models and displays 215 each of the received hardware configuration models on the user device 101. The hardware configuration models for the UPS comprise, for example, physical connections of the UPS with a server for a single power supply configuration, physical connections of the UPS with a server for a redundant power supply with single UPS configuration, physical connections of the UPS with two servers for a redundant power supply with double UPS configuration exemplarily illustrated in FIG 4G, etc.

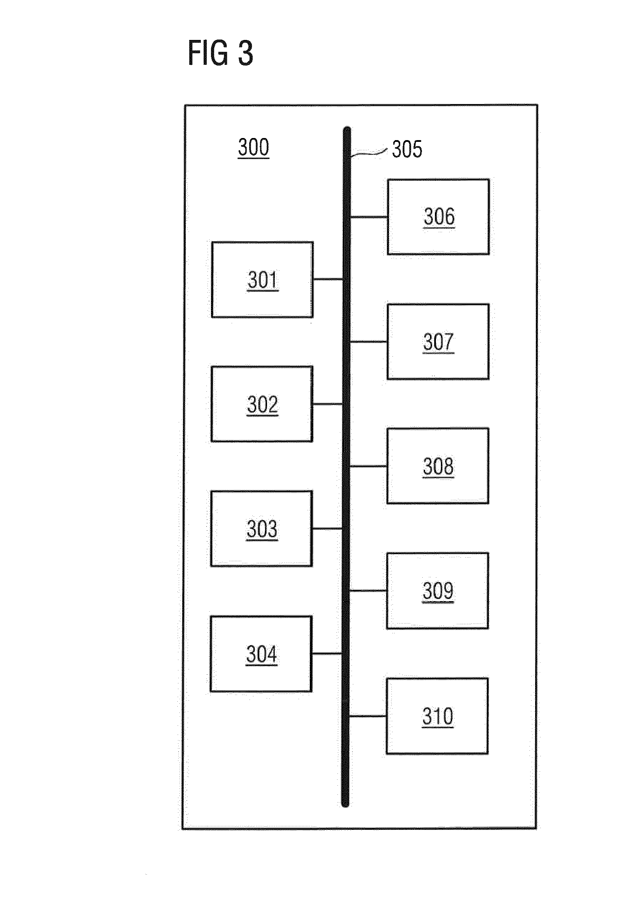

FIG 3 is a block diagram illustrating an exemplary architecture of a computer system 300 employed by the engineering system 102 exemplarily illustrated in FIG 1 for engineering a process. The engineering system 102 of the computer implemented system 100 exemplarily illustrated in FIG 1, employs the architecture of the computer system 300 exemplarily illustrated in FIG 3. The computer system 300 is programmable using a high level computer programming language. The computer system 300 may be implemented using programmed and purposeful hardware. The engineering system 102 communicates with a user device 101 either directly or via a network 108 exemplarily illustrated in FIG 1, for example, a short range network or a long range network, etc.

As exemplarily illustrated in FIG 3, the computer system 300 comprises a processor 301, a non-transitory computer readable storage medium such as a memory unit 302 for storing programs and data, an input/output (I/O) controller 303, a network interface 304, a data bus 305, a display unit 306, input devices 307, a fixed media drive 308 such as a hard drive, a removable media drive 309 for receiving removable media, output devices 310, etc. The processor 301 refers to any one of microprocessors, central processing unit (CPU) devices, finite state machines, computers, microcontrollers, digital signal processors, logic, a logic device, an electronic circuit, an application specific integrated circuit (ASIC), a field-programmable gate array (FPGA), a chip, etc., or any combination thereof, capable of executing computer programs or a series of commands, instructions, or state transitions. The processor 301 may also be implemented as a processor set comprising, for example, a general purpose microprocessor and a math or graphics co-processor. The processor 301 is selected, for example, from the Intel^{®} processors, Advanced Micro Devices (AMD^{®}) processors, International Business Machines (IBM^{®}) processors, etc. The engineering system 102 disclosed herein is not limited to a computer system 300 employing a processor 301. The computer system 300 may also employ a controller or a microcontroller. The processor 301 executes the modules, for example, 103, 104, 105, etc., of the engineering system 102.

The memory unit 302 is used for storing programs, applications, and data. For example, the display module 103, the data reception module 104, the comparator module 105 etc., of the engineering system 102 are stored in the memory unit 302 of the computer system 300. The memory unit 302 is, for example, a random access memory (RAM) or another type of dynamic storage device that stores information and instructions for execution by the processor 301. The memory unit 302 also stores temporary variables and other intermediate information used during execution of the instructions by the processor 301. The computer system 300 further comprises a read only memory (ROM) or another type of static storage device that stores static information and instructions for the processor 301. The I/O controller 303 controls input actions and output actions performed by the engineering system 102.

The network interface 304 enables connection of the computer system 300 to the network 108. For example, the engineering system 102 connects to the network 108 via the network interface 304. In an embodiment, the network interface 304 is provided as an interface card also referred to as a line card. The network interface 304 comprises, for example, one or more of an infrared (IR) interface, an interface implementing Wi-Fi^{®} of Wi-Fi Alliance Corporation, a universal serial bus (USB) interface, a FireWire^{®} interface of Apple Inc., a frame relay interface, a cable interface, a digital subscriber line (DSL) interface, a local area network (LAN) interface, a wide area network (WAN) interface, interfaces using serial protocols, interfaces using parallel protocols, and Ethernet communication interfaces, asynchronous transfer mode (ATM) interfaces, a high speed serial interface (HSSI), a fiber distributed data interface (FDDI), interfaces based on transmission control protocol (TCP)/internet protocol (IP), interfaces based on wireless communications technology such as satellite technology, radio frequency (RF) technology, near field communication, etc. The data bus 305 permits communications between the modules, for example, 103, 104, 105, 106, etc., of the engineering system 102.

The display unit 306, via the graphical user interface (GUI) 106, displays information such as the automation function instances, display interfaces, user interface elements such as text fields, checkboxes, buttons, windows, etc., for allowing a user of the user device 101 to provide his/her inputs such as selection of an automation function instance, selection of a mode of operation, etc., for engineering the process. The display unit 306 comprises, for example, a liquid crystal display, a plasma display, an organic light emitting diode (OLED) based display, etc. The input devices 307 are used for inputting data into the computer system 300. An administrator of the engineering system 102 uses the input devices 307 to provide inputs to the engineering system 102. For example, the administrator can configure initial settings, for example, defining a set of automation function instances in the engineering system 102 for enabling an end user to engineer a range of processes, using the input devices 307. The input devices 307 are, for example, a keyboard such as an alphanumeric keyboard, a joystick, a pointing device such as a computer mouse, a touch pad, a touch sensitive display device, and/or any device capable of sensing a tactile input.

Computer applications and programs are used for operating the computer system 300. The programs are loaded onto the fixed media drive 308 and into the memory unit 302 of the computer system 300 via the removable media drive 309. In an embodiment, the computer applications and programs may be loaded directly via the network 108. Computer applications and programs are executed by double clicking a related icon displayed on the display unit 306 using one of the input devices 307. The output devices 310 output the results of operations performed by the engineering system 102. For example, the engineering system 102 provides graphical comparison analysis results between the engineering completed and the proposed process engineering variant, one or more analytic reports associated with the comparison, for example, a pie chart displaying the differences categorically such as a number of missing blocks, a number of missing connections, etc., using the output devices 310. The engineering system 102 displays these reports using the output devices 310.

The processor 301 executes an operating system, for example, the Linux^{®} operating system, the Unix^{®} operating system, any version of the Microsoft^{®} Windows^{®} operating system, the Mac OS of Apple Inc., the IBM^{®} OS/2, etc. The computer system 300 employs the operating system for performing multiple tasks. The operating system is responsible for management and coordination of activities and sharing of resources of the computer system 300. The operating system further manages security of the computer system 300, peripheral devices connected to the computer system 300, and network connections. The operating system employed on the computer system 300 recognizes, for example, inputs provided by the senders using one of the input devices 307, the output display, files, and directories stored locally on the fixed media drive 308. The operating system on the computer system 300 executes different programs using the processor 301. The processor 301 and the operating system together define a computer platform for which application programs in high level programming languages are written.

The processor 301 of the computer system 300 employed by the engineering system 102 retrieves instructions defined by the display module 103, the data reception module 104, the comparator module 105, etc., of the engineering system 102 for performing respective functions disclosed in the detailed description of FIG 1. The processor 301 retrieves instructions for executing the modules, for example, 103, 104, 105, etc., of the engineering system 102 from the memory unit 302. A program counter determines the location of the instructions in the memory unit 302. The program counter stores a number that identifies the current position in the program of each of the modules, for example, 103, 104, 105, etc., of the engineering system 102. The instructions fetched by the processor 301 from the memory unit 302 after being processed are decoded. The instructions are stored in an instruction register in the processor 301. After processing and decoding, the processor 301 executes the instructions, thereby performing one or more processes defined by those instructions.

At the time of execution, the instructions stored in the instruction register are examined to determine the operations to be performed. The processor 301 then performs the specified operations. The operations comprise arithmetic operations and logic operations. The operating system performs multiple routines for performing a number of tasks required to assign the input devices 307, the output devices 310, and memory for execution of the modules, for example, 103, 104, 105, etc., of the engineering system 102. The tasks performed by the operating system comprise, for example, assigning memory to the modules, for example, 103, 104, 105, etc., of the engineering system 102, and to data used by the engineering system 102, moving data between the memory unit 302 and disk units, and handling input/output operations. The operating system performs the tasks on request by the operations and after performing the tasks, the operating system transfers the execution control back to the processor 301. The processor 301 continues the execution to obtain one or more outputs. The outputs of the execution of the modules, for example, 103, 104, 105, etc., of the engineering system 102 are displayed to the user on the GUI 106.

For purposes of illustration, the detailed description refers to the engineering system 102 being run locally on the computer system 300; however the scope of the computer implemented method and system 200 disclosed herein is not limited to the engineering system 102 being run locally on the computer system 300 via the operating system and the processor 301, but may be extended to run remotely over the network 108 by employing a web browser and a remote server, a mobile phone, or other electronic devices. One or more portions of the computer system 300 may be distributed across one or more computer systems (not shown) coupled to the network 108.

Disclosed herein is also a computer program product comprising a non-transitory computer readable storage medium that stores computer program codes comprising instructions executable by at least one processor 301 for engineering a process. The computer program product comprises a first computer program code for displaying a plurality of automation function instances on a user device 101, via a graphical user interface (GUI) 106, a second computer program code for receiving a selection of an automation function instance from the displayed automation function instances, from the user device 101, a third computer program code for receiving a plurality of proposed process engineering variants based on the received automation function instance from one or more databases 107, 110, a fourth computer program code for displaying the proposed process engineering variants on the user device 101, a fifth computer program code for receiving a selection of a proposed process engineering variant from the proposed process engineering variants, from the user device 101, a sixth computer program code for receiving an engineered process model from the user device 101, a seventh computer program code for generating a comparative analysis by comparing the engineered process model and the proposed process engineering variant based on a plurality of comparison parameters, and an eighth computer program code for displaying the generated comparative analysis indicating one or more differences between the engineered process model and the proposed process engineering variant, for engineering the process, on the user device 101.

The computer program product disclosed herein further comprises one or more additional computer program codes for performing additional steps that may be required and contemplated for engineering a process. In an embodiment, a single piece of computer program code comprising computer executable instructions performs one or more steps of the computer implemented method disclosed herein for engineering a process.

The computer program codes comprising computer executable instructions are embodied on the non-transitory computer readable storage medium. The processor 301 of the computer system 300 retrieves these computer executable instructions and executes them. When the computer executable instructions are executed by the processor 301, the computer executable instructions cause the processor 301 to perform the steps of the computer implemented method for engineering a process.

FIGs 4A-4G exemplarily illustrate screenshots of a graphical user interface (GUI) 106 provided by the engineering system 102 on a user device 101 exemplarily illustrated in FIG 1, for engineering a process. Consider an example, where a user using the user device 101 wishes to engineer a process, for example, a process of a safe shutdown of a control system with a universal power supply (UPS) management proxy, using the engineering system 102 downloaded on the user device 101 or accessible by the user device 101 over a network 108 exemplarily illustrated in FIG 1. The UPS management proxy is a logical process configured using a plurality of automation function instances for a safe shutdown of a distributed control system on an occurrence of a power outage or a fault in the distributed control system. The user, who is, for example, registered with the engineering system 102, accesses the GUI 106 provided by the engineering system 102, as exemplarily illustrated in FIG 4A. By default, the engineering system 102 activates a configuration mode. As used herein, "configuration mode" refers to a mode of operation of the engineering system 102 where a user can perform engineering without verification and validation of the engineered process. In the configuration mode, the engineering system 102 displays a library comprising automation function instances required in engineering the safe shutdown process and an interface element 401 for activating the veracious engineering mode of operation. Since the user wishes to engineer the UPS management proxy, the user selects the automation function instance 402 for UPS from the library. The user activates the veracious engineering mode by pressing the interface element 401. The engineering system 102 activates the veracious engineering mode. In the veracious engineering mode, the engineering system 102 displays a pin diagram for the UPS automation function instance 402A. The engineering system 102 also displays one or more proposed process engineering variants 403 comprising ideal engineering of the process variants including the UPS automation function instance 402A, as exemplarily illustrated in FIG 4B. The proposed process engineering variants 403 comprise, for example, UPS management proxy for a single server with a single power supply, UPS proxy configuration for a single server with a redundant power supply, UPS configuration for a redundant server with a single power supply, and UPS proxy configuration for a redundant server with a redundant power supply. In this veracious engineering mode, the engineering system 102 also displays interface elements 404 and 405 for activation of the veracious engineering comparison mode and the hardware configuration mode respectively.

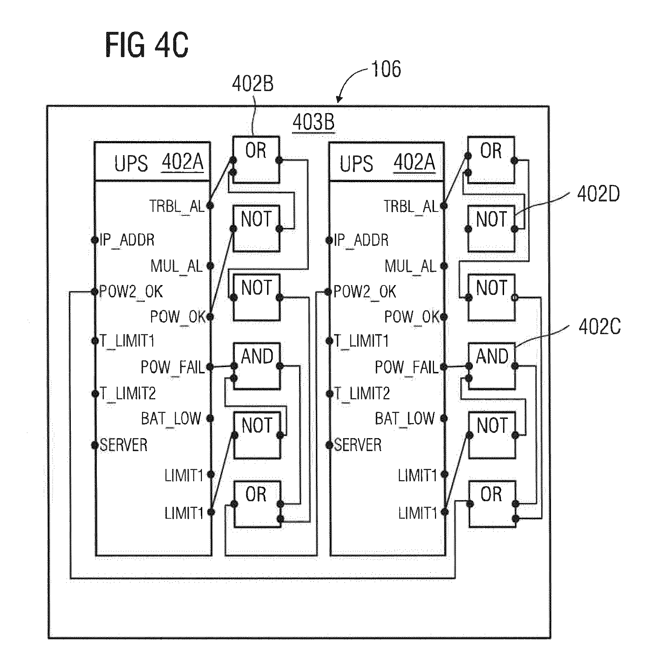

Consider in this example, the user has already completed the engineering, that is, a logical process flow using the automation function instances 402, for the UPS management proxy and wishes to verify and validate the completed engineering against the ideal proposed engineering. The user therefore selects one of the proposed process engineering variants 403 applicable to the user's completed engineering, for example, the proposed process engineering variant 403A for UPS management proxy for a single server with a single power supply or the proposed process engineering variant 403B for the UPS proxy configuration for a single server with a redundant power supply, exemplarily illustrated in FIG 4B. Consider in this example, the user selects the proposed process engineering variant 403B and presses the interface element 404 to activate the veracious engineering comparison mode of operation. The proposed UPS proxy configuration for a single server with a redundant power supply is exemplarily illustrated in FIG 4C. As exemplarily illustrated in FIG 4C, the proposed engineering comprises two individual UPS automation function instance modules 402A logically connected with other automation function instances 402, for example, logic gates such as OR gates 402B, AND gates 402C, and NOT gates 402D, in a particular method to complete the logic of a safe plant process shutdown.

The user uploads his/her completed engineering in the engineering system 102 for comparison with the selected proposed process engineering variant 403B. The engineering system 102 compares the uploaded engineering 406 with the proposed engineering in terms of missing automation function instances 402 as exemplarily illustrated in FIG 4D, missing logical connections between the input ports and the output ports of the automation function instances 402 as exemplarily illustrated in FIG 4E, and incorrect port parameter settings as exemplarily illustrated in FIG 4F. The engineering system 102 performs this comparison, generates the comparative analysis, and displays the generated comparative analysis as exemplarily illustrated in FIGs 4D, 4E, and 4F, with highlighted missing logical connections, missing automation function instances 402, incorrect parameters, etc. The engineering system 102 highlights the differences in one or more ways comprising, for example, highlighting the differences in an eye catching color such as the red color, blinking the difference on an off to attract the user's attention to the difference, etc., when the user presses the interface element 404 for the veracious engineering comparison mode.

As exemplarily illustrated in FIG 4D, the comparative analysis highlights the missing automation function instance for the NOT gate 402D in the proposed engineering to indicate to the user that his/her completed engineering 406 lacks the NOT gate 402D as per the proposed engineering. As exemplarily illustrated in FIG 4E, the comparative analysis highlights the missing/incorrect logical connection between the automation function instance for the AND gate 402C and the POW_FAIL output port of the UPS automation function instance 402A. As exemplarily illustrated in FIG 4E, the comparative analysis highlights the incorrect input port parameter setting of the T_LIMIT1 input port of the UPS automation function instance 402A. The input ports T_LIMIT1 and T_LIMIT2 provide power limits specifying the instances at which the process shut down begins. For example, when the power input being constantly monitored by the control system reaches the limit specified for T_LIMIT1, the software shutdown begins. Once the monitored power reaches the limit specified at T_LIMIT2, the hardware shutdown begins with help of the UPS and the servers.

FIG 4G exemplarily illustrates a hardware configuration of the universal power supply (UPS). Consider in this example, the user selects, that is, presses the interface element 405 exemplarily illustrated in FIGs 4B, 4D, 4E, and 4F for activating the hardware configuration mode of operation. The engineering system 102 communicates with the local database 107 and receives a hardware configuration model 407 for the UPS. The local database 107, in turn communicates with the remote database 110 periodically, to receive updates associated with the hardware configuration models 407. The engineering system 102 displays each of the received hardware configuration models 407 to the user. In an embodiment, if a hardware configuration model 407 for the UPS does not exist in the local database 107, the engineering system 102 disables the interface element 405. The hardware configuration model 407 for the UPS, exemplarily illustrated in FIG 4G, comprises physical connections of two UPS device units with two servers via one or more switches, for example, an optical switch module (OSM) switch or an electrical switch module (ESM) switch. A hardware configuration model 407 for the UPS may exist for one or more configurations comprising, for example, a redundant power supply with two UPSs, a single power supply with a single UPS device unit, a redundant power supply with a single UPS device unit, etc. The engineering system 102 displays each of these hardware configuration models 407 on the user device 101 as a reference for the user in configuring the hardware of the components used in the process.

It will be readily apparent that the various methods, algorithms, and computer programs disclosed herein may be implemented on computer readable media appropriately programmed for computing devices. As used herein, "computer readable media" refers to non-transitory computer readable media that participate in providing data, for example, instructions that may be read by a computer, a processor or a similar device. Non-transitory computer readable media comprise all computer readable media, for example, non-volatile media, volatile media, and transmission media, except for a transitory, propagating signal. Non-volatile media comprise, for example, optical discs or magnetic disks and other persistent memory volatile media including a dynamic random access memory (DRAM), which typically constitutes a main memory. Volatile media comprise, for example, a register memory, a processor cache, a random access memory (RAM), etc. Transmission media comprise, for example, coaxial cables, copper wire, fiber optic cables, modems, etc., including wires that constitute a system bus coupled to a processor, etc. Common forms of computer readable media comprise, for example, a floppy disk, a flexible disk, a hard disk, magnetic tape, a laser disc, a Blu-ray Disc^{®} of the Blu-ray Disc Association, any magnetic medium, a compact disc-read only memory (CD-ROM), a digital versatile disc (DVD), any optical medium, a flash memory card, punch cards, paper tape, any other physical medium with patterns of holes, a random access memory (RAM), a programmable read only memory (PROM), an erasable programmable read only memory (EPROM), an electrically erasable programmable read only memory (EEPROM), a flash memory, any other memory chip or cartridge, or any other medium from which a computer can read.

The computer programs that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the computer program codes comprising computer executable instructions may be implemented in any programming language. Some examples of programming languages that can be used comprise C, C++, C#, Java^{®}, JavaScript^{®}, Fortran, a stack oriented programming language, Ruby, Perl^{®}, Python^{®}, Visual Basic^{®}, hypertext preprocessor (PHP), Microsoft^{®} .NET etc. Other object-oriented, functional, scripting, and/or logical programming languages may also be used. The computer program codes or software programs may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) or perform other functions, when viewed in a visual area or a window of a browser program. Various aspects of the method and system disclosed herein may be implemented as programmed elements, or non-programmed elements, or any suitable combination thereof. The computer program product disclosed herein comprises one or more computer program codes for implementing the processes of various embodiments.

Where databases are described such as the local database 107 and the remote database 110, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

## Claims

1. A computer implemented method for engineering a process, said method employing an engineering system (102) comprising at least one processor (301) configured to execute computer program instructions for performing said method, said method comprising:
displaying a plurality of automation function instances (402) on a user device (101), via a graphical user interface (106) employed by said engineering system (102);
receiving a selection of an automation function instance (402) from said displayed automation function instances (402), from said user device (101), by said engineering system (102);
receiving a plurality of proposed process engineering variants (403) based on said received automation function instance (402) from one or more databases (107, 110) by said engineering system (102);
displaying said proposed process engineering variants (403) on said user device (101) by said engineering system (102);
receiving a selection of a proposed process engineering variant (403) from said proposed process engineering variants (403), from said user device (101) by said engineering system (102);
said method **characterized by**:
receiving an engineered process model (406) from said user device (101) by said engineering system (102), said engineered process model (406) comprising said automation function instance (402) in connection with one or more of other said automation function instances (402);
generating a comparative analysis by comparing said engineered process model (406) and said proposed process engineering variant (402) based on a plurality of comparison parameters, by said engineering system (102); and
displaying said generated comparative analysis indicating one or more differences between said engineered process model (406) and said proposed process engineering variant (402), for said engineering of said process, on said user device (101), by said engineering system (102).

2. The computer implemented method of claim 1, wherein said received automation function instance (402) is a logical representation of a component used in said engineering of said process, wherein said automation function instance (402) comprises component characterization parameters comprising input ports and output ports.

3. The computer implemented method of claim 1, wherein said comparison parameters comprise configuration settings of said process and one or more of a plurality of connections associated with said automation function instance (402).

4. The computer implemented method of claim 1, wherein said one or more of said databases (107, 110) are periodically updated with said proposed process engineering variants (403), one or more proposed hardware configuration models (407) associated with said process, technical news associated with said process, and technical publications associated with said process.

5. The computer implemented method of claim 1, wherein each of said proposed process engineering variants (403) comprises one or more of proposed connections of said automation function instance (402) with said other automation function instances (402) for said engineering of said process, and proposed configuration settings of said process.

6. An engineering system (102) for engineering a process, said engineering system (102) comprising:
a non-transitory computer readable storage medium (304) storing computer program instructions defined by modules of said engineering system (102);
at least one processor (301) communicatively coupled to said non-transitory computer readable storage medium (304), said at least one processor (301) executing said defined computer program instructions; and
said modules of said engineering system (102) comprising:
a display module (103) configured to display a plurality of automation function instances (402) on a user device (101), via a graphical user interface (106);
a data reception module (104) configured to receive a selection of an automation function instance (402) from said displayed automation function instances (402), from a user device (101);
said data reception module (104) further configured to receive a plurality of proposed process engineering variants (403) based on said received automation function instance (402) from one or more databases (107, 110);
said display module (103) configured to display said proposed process engineering variants (403) on said user device (101);
said data reception module (104) further configured to receive a selection of a proposed process engineering variant (403) from said proposed process engineering variants (403), from said user device (101);
said modules of said engineering system (102) **characterized by**:
said data reception module (104) further configured to receive an engineered process model (406) from said user device (101), said engineered process model (406) comprising said automation function instance (402) in connection with one or more of other said automation function instances (402);
a comparator module (105) configured to generate a comparative analysis by comparing said engineered process model (406) and said proposed process engineering variant (403) based on a plurality of comparison parameters; and
said display module (103) further configured to display said generated comparative analysis indicating one or more differences between said engineered process model (406) and said proposed process engineering variant (403), for said engineering of said process, on said user device (101).

7. The engineering system (102) of claim 6, wherein said received automation function instance (402) is a logical representation of a component used in said engineering of said process, wherein said automation function instance (402) comprises component characterization parameters comprising input ports and output ports.

8. The engineering system (102) of claim 6, wherein said comparison parameters comprise configuration settings of said process and one or more of a plurality of connections associated with said automation function instance (402).

9. The engineering system (102) of claim 6, wherein said one or more of said databases (107, 110) are periodically updated with said proposed process engineering variants (403), one or more proposed hardware configuration models (407) associated with said process, technical news associated with said process, and technical publications associated with said process.

10. The engineering system (102) of claim 6, wherein each of said proposed process engineering variants (403) comprises one or more of proposed connections of said automation function instance (402) with said other automation function instances (402) for said engineering of said process, and proposed configuration settings of said process.

11. A computer program product comprising a non-transitory computer readable storage medium (304), said non-transitory computer readable storage medium (304) storing computer program codes that comprise instructions executable by at least one processor (301), said computer program codes comprising:
a first computer program code for displaying a plurality of automation function instances (402) on a user device (101), via a graphical user interface (106);
a second computer program code for receiving a selection of an automation function instance (402) from said displayed automation function instances (402), from said user device (101), wherein said received automation function instance (402) is a logical representation of a component used in said engineering of said process, wherein said automation function instance (402) comprises component characterization parameters comprising input ports and output ports;
a third computer program code for receiving a plurality of proposed process engineering variants (403) based on said received automation function instance (402) from one or more databases (107, 110), wherein said one or more of said databases (107, 110) are periodically updated with proposed process engineering variants (403), one or more proposed hardware configuration models (407) associated with said process, technical news associated with said process, and technical publications associated with said process, and wherein each of said proposed process engineering variants (403) comprises one or more of proposed connections of said automation function instance (402) with said other automation function instances (402) for said engineering of said process, and proposed configuration settings of said process;
a fourth computer program code for displaying said proposed process engineering variants (403) on said user device (101);
a fifth computer program code for receiving a selection of a proposed process engineering variant (403) from said proposed process engineering variants (403), from said user device (101);
said computer program product **characterized by**:
a sixth computer program code for receiving an engineered process model (406) from said user device (101), said engineered process model (406) comprising said automation function instance (402) in connection with one or more of other said automation function instances (402);
a seventh computer program code for generating a comparative analysis by comparing said engineered process model (406) and said proposed process engineering variant (403) based on a plurality of comparison parameters, wherein said comparison parameters comprise configuration settings of said process and one or more of a plurality of connections associated with said automation function instance (402); and
an eighth computer program code for displaying said generated comparative analysis indicating one or more differences between said engineered process model (406) and said proposed process engineering variant (403), for said engineering of said process, on said user device (101).
